# EUROPÄISCHE PATENTSCHRIFT

(11) **EP 2 434 295 B1**
(45) Veröffentlichungstag und Bekanntmachung des Hinweises auf die Patenterteilung: **07.08.2019**
(21) Anmeldenummer: 11170870.7
(22) Anmeldetag: 22.06.2011
(51) Int. Cl.: G01P 3/49, G01D 5/20

(54) **Sensorvorrichtung zur Erfassung mindestens einer Rotationseigenschaft**
Sensor device for determining at least one rotation characteristic
Dispositif de capteur pour évaluer au moins une caractéristique de rotation

(30) Priorität: 23.09.2010 DE 102010041245
(43) Veröffentlichungstag der Anmeldung: 28.03.2012
(73) Patentinhaber: Robert Bosch GmbH, 70442 Stuttgart (DE)
(72) Erfinder: Kassner, Uwe, 71696 Moeglingen (DE)

(56) Entgegenhaltungen:
- WO-A2-2009/059656
- DE-A1- 1 673 439
- DE-A1- 10 216 635
- US-A1- 2007 200 562
- US-A1- 2007 268 014
- Acam-Messelectronic Gmbh: "Data Sheet PT2G Series Smart Sensors for Turbochargers, 2", , 8 March 2010 (2010-03-08), pages 1-20, XP055431222, Retrieved from the Internet: URL:http://www.acam.de/uploads/media/DB_PT 2G_e.pdf [retrieved on 2017-12-01]

## Beschreibung

### Stand der Technik

Aus dem Stand der Technik sind eine Vielzahl von Sensorvorrichtungen und Verfahren zur Erfassung mindestens einer Rotationseigenschaft bekannt. Hierbei kann es sich grundsätzlich um beliebige physikalische Rotationseigenschaften handeln, insbesondere Drehzahl, Winkelgeschwindigkeit, Winkelbeschleunigung und Periodendauer. Hierbei können eine oder mehrere Rotationseigenschaften bestimmt werden. Solche Sensorvorrichtungen zur Erfassung mindestens einer Rotationseigenschaft können im Allgemeinen zur Bestimmung von Rotationseigenschaften von Rädern, insbesondere für Fahrzeuge, verwendet werden. Die Erfindung wird im Folgenden unter Bezugnahme auf eine quantitative Erfassung einer Drehzahl eines Verdichterrades eines Abgasturboladers, beschrieben.

Aus dem Stand der Technik sind insbesondere Wirbelstromsensoren bekannt. Ein Beispiel für einen solchen Wirbelstromsensor für die Drehzahlerfassung an Turboladern ist in DE 196 23 236 A1 beschrieben. Es wird ein Verfahren zum Messen der Drehzahl eines Verdichterrades mit Verdichterschaufeln im Innenraum eines Verdichtergehäuses vorgestellt. Hierbei erzeugt ein in einer zum Innenraum offenen Öffnung der Gehäusewand befindlicher Permanentmagnet ein konstantes Magnetfeld. Das Magnetfeld wirkt im Wesentlichen rechtwinklig zur Bewegungsrichtung der Verdichterschaufeln auf die der Innenoberfläche des Gehäuses zugewandten elektrisch leitenden Spitzen der Verdichterschaufeln ein. Beim Vorbeibewegen der Verdichterschaufeln entstehen in diesen Wirbelströme, welche ein magnetisches Wechselfeld erzeugen. Dieses wird mit Hilfe eines Sensors, insbesondere einer Spule, die den Permanentmagneten umgibt oder getrennt vom Permanentmagneten angeordnet ist, detektiert. Aus diesem Signal wird die Rotationseigenschaft bestimmt. Alternativ hierzu kann auch eine Vorrichtung Verwendung finden, wie sie in US 2007/0268014 A1 beschrieben wird. Hierbei erzeugt eine Spule, deren Achse in Richtung der Verdichterschaufeln gerichtet ist, ein Magnetfeld. Bei diesem Magnetfeld kann es sich insbesondere um ein magnetisches Wechselfeld handeln.

Dieses erzeugt beim Vorbeibewegen der Verdichterschaufeln Wirbelströme in diesen. Diese Wirbelströme erzeugen wiederum ein magnetisches Feld, welches durch die Spule detektiert werden kann. Bei beiden Methoden wird ein Signal generiert, dessen Frequenz gleich dem Produkt aus Drehzahl und Anzahl der Verdichterschaufeln ist.

Andere aus dem Stand der Technik bekannte Sensorvorrichtungen zur Erfassung mindestens einer Rotationseigenschaft verwenden anstelle einer Spule zur Detektion des durch die Wirbelströme erzeugten Magnetfeldes aktive magnetfeldempfindliche Sensorelemente, die beispielsweise auf der Anwendung des Hall- oder GMR-Effekts basieren. Das Verdichtergehäuse kann nicht nur aus metallischen Materialien bestehen, sondern auch aus Kunststoffmaterial. Aus DE 10 2007 005 769 A1 ist bekannt, dass ein zur Erzeugung eines Magnetfelds verwendeter Permanentmagnet sowie die Sensorschaltung räumlich getrennt voneinander im Kunststoffmaterial des Verdichtergehäuses angebracht sein können. Diese Möglichkeit ergibt sich aus den unterschiedlichen elektromagnetischen Eigenschaften von Kunststoffen und metallischen Materialien, insbesondere der fehlenden elektrischen Leitfähigkeit von Kunststoffmaterialien und der dadurch nicht vorhandenen Abschirmung von elektromagnetischen Feldern.

Sensorvorrichtungen der oben genannten Art sind üblicherweise als kleine, beispielsweise zylindrische Elemente ausgelegt, um dem beschränkten Raum zu genügen. Verbunden mit der geringen elektrisch wirksamen Fläche an den Verdichterschaufeln, die zusätzlich für eine robuste Messwerterfassung durch die Einhaltung einer geringen Luftspalttoleranz zwischen der Sensorvorrichtung und den Verdichterschaufeln verringert wird, wird der Messeffekt beschränkt und eine aufwändige Signalverarbeitung wird erforderlich. Bei Sensorvorrichtungen zur Erfassung mindestens einer Rotationseigenschaft, bei denen das Signal aus Wirbelströmen in den Verdichterschaufeln generiert wird, ist die Signalfrequenz recht hoch, da sie proportional zur Anzahl der Verdichterschaufeln ist, was den Aufwand der Signalverarbeitung zusätzlich erhöht.

Aus der WO 2009/059656 A2 ist eine Wirbelstromsensoranordnung bekannt, bei der eine Position eines Geberelementes relativ zu einer Spulenanordnung auf der Grundlage positionsabhängiger Wirbelstromverluste ermittel wird,
Aus der DE 102 16 635 A1 ist ein Bewegungsdetektor bekannt, bei dem ein Anregungselemenet nach dem Ferraripinzip ein Induktionselement mit einem inhomogenen, zeitveränderlichen magnetischen Wechelfeld beaufschlagt, wobei in dem Induktionselement ein Wirbelstrom induziert wird, dessen zeitliche Änderung mit einem Sensorelement erfasst wird.

Die DE 16 73 439 A1 beschreibt einen Wirbelstromsensor mit Gleichfelderregung, bei dem ein eng begrenztes, ortsfestes, magnetischesn Gleichfeld eine mit der zu messenden Geschwindigkeit sich bewegende Metallscheibe senkrecht durchsetzt und darin Wirbelströme induziert.

Aus der US 2007/200562 A1 ist ein Verdichter zum Verdichten fluider Medien bekannt, der eine Sensorvorrichtung zur Erfassung einer Drehzahlerfassung des Verdichters umfasst, wobei die Sensorvorrichtung mindestens ein erstes Element und mindestens ein zweites Element umfasst, wobei das erste Element und das zweite Element um eine Rotationsachse relativ zueinander rotierbar sind, wobei die Sensorvorrichtung mindestens einen mit dem ersten Element verbundenen Felderzeuger aufweist, wobei der Felderzeuger eingerichtet ist, um an mindestens einem Ort des zweiten Elements mindestens einen Wirbelstrom zu erzeugen, wobei das erste Element weiterhin mindestens einen Feldsensor zur Erfassung mindestens eines durch den Wirbelstrom erzeugten Feldes umfasst, wobei das zweite Element eingerichtet ist, um das durch den Wirbelstrom erzeugte Feld in Abhängigkeit von einer Winkelstellung des zweiten Elements relativ zum ersten Element zu variieren und wobei der Verdichter ein das erste Element umfassendes Verdichtergehäuse und ein das zweite Element umfassendes Verdichterrad mit einer Mehrzahl von Verdichterschaufeln aufweist, wobei das Verdichterrad eine einem Boden des Verdichtergehäuses zuweisende Rotationsfläche aufweist und auf der der Rotationsfläche ggenüberliegenden Seite des Verdichterrades eine Mehrzahl von Verdichterschaufeln angeordnet ist.

Die aus der Druckschrift "Data Sheet PT2G Series Smart Sensors for Turbochargers, 2" vom 8. März 2010, Seiten 1-20 sind indutkive Sensorvorrichtungen zur Erfassung einer Drehzahl eines in einem Verdichtergehäuse angeordneten Verdichterrades eines Abgasturboladers bekannt.

### Offenbarung der Erfindung

Es wird eine Sensorvorrichtung zur Erfassung mindestens einer Rotationseigenschaft vorgeschlagen, welche die Nachteile bekannter Sensorvorrichtungen zumindest weitgehend vermeidet. Insbesondere kann es sich, wie oben beschrieben, bei der mindestens einen Rotationseigenschaft um eine Drehzahl, Winkelgeschwindigkeit, Winkelbeschleunigung, eine Periodendauer oder eine Konmbination der genannten Rotationseigenschaften und/oder anderer Rotationseigenschaften handeln oder eine aus den genannten Rotationseigenschaften abgeleitete Messgröße. Auch andere Rotationseigenschaften sind jedoch grundsätzlich erfassbar. Die Erfindung ist insbesondere im Bereich der Kraftfahrzeugtechnik einsetzbar.

Die Sensorvorrichtung wird in einem Verdichter zum Verdichten fluider Medien eingesetzt. Der Verdichter weist ein Verdichtergehäuse auf, welches wiederum einen Boden umfasst, der das Verdichtergehäuse zu einer Turbine hin abschließt. Desweiteren umfasst der Verdichter mindestens ein Verdichterrad, welches über eine Welle mit der Turbine verbunden sein kann. Das Verdichterrad ist mit mehreren Verdichterschaufeln bestückt. Die Sensorvorrichtung gemäß der vorliegenden Erfindung kann insbesondere eine Sensorvorrichtung zur Drehzahlerfassung eines Verdichterrades eines Abgasturboladers sein.

Die Sensorvorrichtung umfasst mindestens ein erstes Element und mindestens ein zweites Element, wobei das erste Element und das zweite Element um eine Rotationsachse relativ zueinander rotierbar sind. Das erste Element und das zweite Element sind gegeneinander entlang der Rotationsachse versetzt angeordnet. Die Sensorvorrichtung weist mindestens einen mit dem ersten Element verbundenen Felderzeuger auf. Bei dem Felderzeuger kann es sich grundsätzlich um ein beliebiges Element handeln, welches eingerichtet ist, um ein Feld, insbesondere ein Magnetfeld und/oder ein elektrisches Feld und/oder ein elektromagnetisches Feld, zu erzeugen. Beispielsweise kann der Felderzeuger eines oder mehrere der folgenden Elemente umfassen: einen Permanentmagneten; eine Spule mit Kern; eine Spule ohne Kern; einen stromdurchflossenen Leiter. Der Felderzeuger ist derart eingerichtet, dass an mindestens einem Ort des zweiten Elements mindestens ein Wirbelstrom erzeugt wird.

Das erste Element weist weiterhin mindestens einen Feldsensor auf. Ein Feldsensor kann grundsätzlich ein beliebiges Element zur Erfassung eines elektrischen und/oder magnetischen und/oder elektromagnetischen Feldes sein. Der Feldsensor kann getrennt von dem Felderzeuger angeordnet sein, kann jedoch auch ganz oder teilweise bauteilidentisch mit dem Felderzeuger sein. Insbesondere kann der Feldsensor eines oder mehrere der folgenden Elemente umfassen: eine Spule ohne Kern; eine Spule mit Kern; ein aktives magnetfeldempfindliches Sensorelement, insbesondere ein oder mehrere Elemente, bei denen der Hall- und/oder GMR-Effekt ausgenutzt wird. Der Feldsensor dient zur Erfassung mindestens eines durch den Wirbelstrom erzeugten Feldes, wobei das zweite Element eingerichtet ist, um das durch den Wirbelstrom erzeugte Feld in Abhängigkeit von einer Winkelstellung des zweiten Elements relativ zum ersten Element zu variieren. Dies bedeutet, dass mindestens zwei Winkelstellungen des zweiten Elements relativ zu dem ersten Element existieren, wobei ein erstes Feld, das durch den Wirbelstrom in der ersten Winkelstellung erzeugt wird, von einem zweiten Feld, das durch den Wirbelstrom in der zweiten Winkelstellung erzeugt wird, abweicht, beispielsweise um mindestens 1 %, insbesondere um mindestens 10% und besonders bevorzugt um mindestens 50 % in einer Feldamplitude oder Feldintensität am Ort des Feldsensors.

Bei dem ersten Element handelt es sich um den Boden des Verdichtergehäuses, welches beim Betrieb des Verdichters ruht bzw. relativ zu dem gesamten Verdichter nicht rotiert. Das zweite Element weist eine Rotationsfläche auf, die dem Felderzeuger und/oder dem Feldsensor zuweisen kann. Der Ort, an dem der Wirbelstrom im zweiten Element erzeugt wird, ist hierbei entlang der Rotationsachse gegenüber dem Felderzeuger und/oder dem Feldsensor versetzt angeordnet. Bei dem zweiten Element handelt es sich um das Verdichterrad des Abgasturboladers. Das Verdichterrad weist eine dem Boden des Verdichtergehäuses zuweisende Rotationsfläche auf. Auf einer der Rotationsfläche gegenüberliegenden Seite des Verdichterrades ist eine Mehrzahl von Verdichterschaufeln angeordnet ist. Erfindungsgemäß ist der mindestens eine Felderzeuger und der mindestens eine Feldsensor auf einer von den Verdichterschaufeln abgewandten Seite des Verdichterrads in dem Boden des Verdichtergehäuses angeordnet. In der Rotationsfläche des Verdichterrades sind Bohrungen oder Ausfräsungen angeordnet.

Die Rotationsfläche des zweiten Elements kann insbesondere im Wesentlichen senkrecht zu der Rotationsachse angeordnet sein. Unter "im Wesentlichen senkrecht" kann hierbei ein Winkel von 90° verstanden werden. Alternativ sind jedoch auch leichte Abweichungen von 90° möglich, beispielsweise Winkel von 70° bis 110°, vorzugsweise 80° bis 100°, besonders bevorzugt 85° bis 95° und insbesondere 89° bis 91°.

Das zweite Element kann grundsätzlich aus einem oder mehreren beliebigen Materialien gefertigt sein. Insbesondere können leitfähige Materialien verwendet werden, beispielsweise ein oder mehrere metallische Materialien und/oder ein oder mehrere leitfähige Kunststoffe. Das zweite Element ist insbesondere derart ausgestaltet, dass in Abhängigkeit einer Winkelstellung des zweiten Elements relativ zum ersten Element unterschiedliche Felder am Feldsensor erfasst werden können. Beispielsweise kann das zweite Element von der relativen Winkelstellung des zweiten Elements zum ersten Element winkelabhängige inhomogene elektromagnetische Eigenschaften aufweisen oder verursachen. Dies kann beispielsweise durch eine winkelasymmetrische Ausgestaltung der Geometrie des zweiten Elements und/oder durch eine winkel-asymmetrische Ausgestaltung der Materialeigenschaften des zweiten Elements erreicht werden. Insbesondere können sich aufgrund unterschiedlicher elektromagnetischer Eigenschaften von Luft und dem Material, aus welchem das zweite Element gefertigt ist, vorzugsweise einem metallischen Material, Inhomogenitäten der elektromagnetischen Eigenschaften des zweiten Elements ergeben.

Insbesondere kann das zweite Element mindestens eine Vertiefung aufweisen. Die Vertiefung kann unausgefüllt sein oder kann auch ganz oder teilweise mit mindestens einem von dem übrigen Material des zweiten Elements verschiedenen Material, insbesondere hinsichtlich der magnetischen Eigenschaften verschiedenen Material, ausgefüllt sein, beispielsweise mindestens einem nicht-magnetischen Material und/oder Luft. Beispielsweise kann die oben beschriebene Rotationsfläche des zweiten Elements, welche insbesondere eine ebene Fläche sein kann, mindestens eine derartige Vertiefung aufweisen, vorzugsweise mindestens zwei Vertiefungen oder genau zwei Vertiefungen. Beispielsweise können mindestens zwei, vorzugsweise genau zwei, winkelversetzte, vorzugsweise um 180° winkelversetzte, Vertiefungen vorgesehen sein. Beispielsweise kann die mindestens eine Vertiefung mindestens eine Bohrung und/oder mindestens eine Ausfräsung umfassen.

Grundsätzlich können, alternativ oder zusätzlich zu einer geometrischen Ausgestaltung, die winkelabhängigen inhomogenen elektromagnetischen Eigenschaften im zweiten Element beispielsweise auch durch beliebige Materialkombinationen unterschiedlicher Materialien hervorgerufen werden.

Aufgrund einer bevorzugten Masseverteilung des zweiten Elements, bei der der Masseschwerpunkt auf der Rotationsachse liegt, sollten Vertiefungen und/oder Materialvariationen aus Materialien unterschiedlicher elektromagnetischer Eigenschaften derart zueinander angeordnet sein, dass eine ganzzahlige Rotationssymmetrie entsteht. Grundsätzlich kann die rotationssymmetrische Massenverteilung auch durch Variation von Materialien gleicher Dichte aber unterschiedlicher elektromagnetischer Eigenschaften hervorgerufen werden.

Als Felderzeuger kann insbesondere eine Spule verwendet werden, welche eingerichtet sein kann, um ein magnetisches Wechselfeld zu erzeugen. Diese Spule kann insbesondere derart eingerichtet sein, dass sie mit einer elektrischen Wechselspannung betrieben wird, wodurch ein elektromagnetisches Wechselfeld erzeugt wird. Die Spule kann ohne einen Kern oder mit einem Kern, insbesondere mit einem Ferritkern, ausgestaltet sein, wobei es sich bei dem Kern vorzugsweise um einen Ferritkern handelt. Die Spule kann nicht nur als Felderzeuger dienen, sondern kann auch zumindest teilweise bauteilidentisch mit dem Feldsensor sein. Die Sensorvorrichtung umfasst vorzugsweise mindestens eine Auswertevorrichtung, welche eingerichtet ist, um aus einem zeitlichen Verlauf eines elektrischen Signals der Spule die mindestens eine Rotationseigenschaft, insbesondere die Drehzahl, zu bestimmen. Diese Auswertevorrichtung kann grundsätzlich ein oder mehrere beliebige elektrische und/oder elektronische Elemente umfassen, welche für eine derartige Signalauswertung eingerichtet sind. Derartige Signalauswertevorrichtungen sind dem Fachmann grundsätzlich bekannt. Beispielsweise kann die Auswertevorrichtung mindestens einen Verstärker und/oder eine Vorrichtung zur Frequenzbestimmung umfassen. Beispielsweise kann an der Signalauswertevorrichtung ein Signal entstehen, das eine Frequenz proportional zur Drehzahl enthält.

Das erste Element kann grundsätzlich aus einem oder mehreren beliebigen Materialien gefertigt sein, beispielsweise mindestens einem metallischen und/oder mindestens einem Kunststoffmaterial. Das erste Element kann insbesondere zumindest teilweise aus einem Kunststoffmaterial gefertigt sein. Der Felderzeuger und/oder der Feldsensor können insbesondere zumindest teilweise in dem Kunststoffmaterial eingebettet sein. Bei dem ersten Element kann es sich wie oben beschrieben insbesondere um den Boden des Verdichtergehäuses handeln, welcher den Felderzeuger und/oder den Feldsensor umfassen kann. Insbesondere in diesem Fall kann ein Kunststoffmaterial verwendet werden, welches eine geringe oder keine elektromagnetische Leitfähigkeit aufweist, wodurch eine Abschirmung der elektromagnetischen Felder verhindert oder zumindest vermindert werden kann. Insbesondere können mindestens eine Spule und/oder mindestens ein Permanentmagnet durch Umspritzen in das Verdichtergehäuse eingebettet sein. Insbesondere können die elektrischen Leitungen zu der Spule durch mindestens einen Stecker oder mindestens ein anderes Verbindungselement am Verdichtergehäuse oder einem Kabelschwanz weitergeführt werden.

### Kurze Beschreibung der Zeichnungen

Weitere Einzelheiten und Merkmale ergeben sich aus der nachfolgenden Beschreibung bevorzugter Ausführungsbeispiele, welche in den Figuren schematisch dargestellt sind.

Es zeigen:
- Figuren 1A und 1B: ein erstes Ausführungsbeispiel eines erfindungsgemäßen Verdichters mit Sensorvorrichtung, bei welcher Inhomogenitäten elektromagnetischer Eigenschaften eines zweiten Elements durch Bohrungen erzeugt sind;
- Figur 2: ein zweites Ausführungsbeispiel eines erfindungsgemäßen Verdichters und mit Sensorvorrichtung, bei welcher Inhomogenitäten elektromagnetischer Eigenschaften eines zweiten Elements durch Ausfräsungen erzeugt sind.

### Ausführungsformen der Erfindung

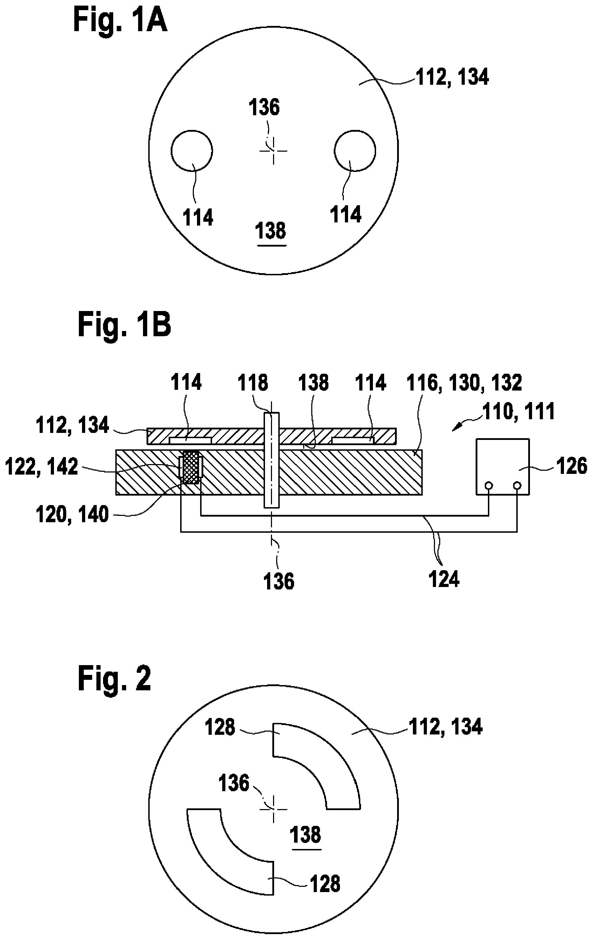

In den Figuren 1A und 1B ist ein erstes Ausführungsbeispiel einer erfindungsgemäßen Sensorvorrichtung 110 dargestellt, welche in einem Verdichter 111 eingesetzt ist. Dabei zeigt Figur 1B eine Schnittdarstellung des Verdichters 111 von der Seite, wohingegen Figur 1A eine Draufsicht auf ein Verdichterrad 112 des Verdichters 111 und der Sensorvorrichtung 110 ohne die übrigen Bestandteile des Verdichters 111 zeigt.

Der Verdichter 111 weist ein Verdichtergehäuse 130 mit einem Boden 116 auf, welches in Figur 1B schematisch dargestellt ist und welches darüber hinaus weitere, nicht dargestellte Teile umfassen kann. Der Boden 116 des Verdichtergehäuses 130 bildet ein erstes Element 132 der Sensorvorrichtung 110 oder ein Teil desselben. Weiterhin umfasst der Verdichter 111 das oben genannte Verdichterrad 112 als ein zweites Element 134 der Sensorvorrichtung 110 oder als Teil desselben. Das erste Element 132 und das zweite Element 134 sind um eine Rotationsachse 136 relativ zueinander rotierbar. Dies wird in dem vorliegenden Ausführungsbeispiel beispielsweise dadurch gewährleistet, dass der Boden 116 des Verdichtergehäuses 130 und das Verdichterrad 112 über eine Welle 118 miteinander verbunden sind und entlang der Rotationsachse 136 versetzt auf der Welle 118 angeordnet sind.

Das Verdichterrad 112 ist in dem dargestellten Ausführungsbeispiel exemplarisch als Kreisscheibe augestaltet und weist eine dem Boden 116 des Verdichtergehäuses 130 zuweisende Rotationsfläche 138 auf. Die Figur 1A stellt eine Draufsicht auf diese Rotationsfläche 138 dar. Auf der der Rotationfläche 138 gegenüberliegenden Seite des Verdichterrads 112 sind vorzugsweise eine Mehrzahl von Verdichterschaufeln angeordnet, welche in Figur 1B nicht dargestellt sind. Die Welle 118 kann das Verdichterrad 112 beispielsweise mit einer in den Figuren nicht dargestellten Turbine und/oder einem Antrieb verbinden.

Das Verdichterrad 112 umfasst in diesem Ausführungsbeispiel in seiner Rotationsfläche 138 zwei Bohrungen 114, die um 180° winkelversetzt zueinander in zweizähliger Symmetrie angeordnet sind. Die Bohrungen 114 sind in diesem Ausführungsbeispiel mit Luft gefüllt. Grundsätzlich können Anzahl, Winkelbeziehung und Füllung der Bohrungen 114 variiert werden. Die elektromagnetischen Materialeigenschaften der Füllung der Bohrungen 114 sollen sich dabei von denen des übrigen Verdichterrades 112 unterscheiden. Anzahl, Winkelbeziehung und Variation der Füllung sollen vorzugsweise dergestalt sein, dass der Massenschwerpunkt des Verdichterrades 112 im Wesentlichen auf der Rotationsachse 136 liegt. Dies kann z.B. dadurch sichergestellt werden, dass die Bohrungen 114 in ganzzahliger Symmetrie angebracht sind und mit Medien mit gleicher Dichte gefüllt sind und/oder in beliebiger Symmetrie angebracht und mit Medien gleicher Dichte wie das Material des Verdichterrads 112 aber unterschiedlicher elektromagnetischer Eigenschaften gefüllt sind. Auch andere Ausgestaltungen sind jedoch grundsätzlich möglich.

In dem Boden 116 des Verdichtergehäuses 130 sind in dem dargestellten Ausführungsbeispiel mindestens ein Felderzeuger 120 sowie mindestens ein Feldsensor 122 aufgenommen. Der Felderzeuger 120 sowie der Feldsensor 122 sind vorzugsweise zumindest teilweise in einen Teil des Verdichtergehäuses 130 eingelassen, beispielsweise in dem Boden 116 des Verdichtergehäuses 130. Der Boden 116 des Verdichtergehäuses 130 ist vorzugsweise zumindest teilweise aus einem Kunststoffmaterial gefertigt. Prinzipiell können aber auch ein oder mehrere andere Materialien verwendet werden, wobei darauf geachtet werden sollte, dass eine elektrische Leitfähigkeit des Materials derart ist, dass elektromagnetische Felder zwischen dem Felderzeuger 120, dem Feldsensor 122 und dem Verdichterrad 112 nicht oder möglichst geringfügig abgeschirmt werden. In diesem Ausführungsbeispiel wird als Felderzeuger 120 vorzugsweise mindestens ein Permanentmagnet 140 verwendet. Als Feldsensor 122 dient beispielsweise mindestens eine Spule 142. Alternativ oder zusätzlich können für den Felderzeuger 120 und für den Feldsensor 122 auch andere Komponenten und/oder Bauelemente, beispielsweise wie oben beschrieben, verwendet werden. Die als Feldsensor 122 verwendete Spule 142 kann auch als Felderzeuger 120 oder als Teil desselben verwendet werden. Bei dieser Variante kann ein zusätzlicher Felderzeuger 120 wegfallen oder auch beispielsweise ganz oder teilweise durch einen Ferritkern der Spule 142 ersetzt.

Der Feldsensor 122 und/oder der Felderzeuger 120 können durch eine oder mehrere elektrische Leitungen 124 elektrisch kontaktierbar sein. Auch eine andere Art der Kontaktierung und/oder Ansteuerung und/oder Auslesung des Feldsensors 122 und/oder des Felderzeugers 120 sind möglich, beispielsweise eine berührungslose Kontaktierung über Infrarot und/oder Funk. Die elektrischen Leitungen 124 können beispielsweise in einem nicht näher bezeichneten Stecker am Verdichtergehäuse 130 und/oder einem Kabelschwanz zu einer Auswertevorrichtung 126 der Sensorvorrichtung 110 oder des Verdichters 111 weitergeführt sein. Die Auswertevorrichtung 126 kann beispielsweise eingerichtet sein, um die Sensorvorrichtung 110 und/oder den Verdichter 111 anzusteuern und/oder um Signale der Sensorvorrichtung 110 aufzunehmen und optional zumindest teilweise zu verarbeiten. Beispielsweise kann die Auswertevorrichtung 126 ein oder mehrere elektronische Komponenten umfassen. Weiterhin kann die Auswertevorrichtung 126 auch mindestens eine Datenverarbeitungsvorrichtung umfassen. Insbesondere kann die Auswertevorrichtung 126 beispielsweise eingerichtet sein, um einen zeitlichen Verlauf eines Signals der Sensorvorrichtung 110 auszuwerten, beispielsweise durch eine Frequenzfilterung und/oder ein Lock-In-Verfahren.

Der Felderzeuger 120, insbesondere die Spule 142 und/oder der Permanentmagnet 140, erzeugt vorzugsweise ein magnetisches Wechselfeld bzw. ein konstantes Magnetfeld. Durch die Rotation des Verdichterrads 112 entstehen durch das magnetische Feld Wirbelströme im Verdichterrad 112, wobei die Wirbelströme ihrerseits ein elektromagnetisches Feld erzeugen, das von dem Feldsensor 122 erfasst werden kann.

Das elektromagnetische Feld der Wirbelströme am Ort des Feldsensors 122 kann insbesondere von elektromagnetischen Materialeigenschaften eines bei der Rotationsbewegung des Verdichterrads 112 vom Felderzeuger 120 und/oder Feldsensor 122 überstrichenen Bereichs und/oder einer relativen Winkelstellung des Verdichterrads 112 relativ zu dem Boden 116 des Verdichtergehäuses 130 abhängen. Dieses von den Wirbelströmen erzeugte elektromagnetische Feld wird von dem Feldsensor 122, in diesem Ausführungsbeispiel der Spule 142, aufgenommen. Eine Signalauswertung, welche beispielsweise in der Auswertevorrichtung 126 implementiert sein kann, kann aus diesem Sensorsignal die gewünschte Rotationseigenschaft, beispielsweise eine Drehzahl des Verdichterrads 112, bestimmen.

Figur 2 zeigt eine weitere mögliche Variante eines modifizierten Verdichterrads 112 in einer zu Figur 1A analogen Darstellung, welches beispielsweise in einer Sensorvorrichtung 110 und/oder einem Verdichter 111 analog zu dem Beispiel in Figur 1B eingesetzt werden kann. Anstelle der Bohrungen 114 des vorhergehenden Ausführungsbeispiels ist das Verdichterrad 112 hier durch Ausfräsungen 128 modifiziert. Die eigentliche Erfassung der Rotationseigenschaft erfolgt analog zum vorhergehenden Ausführungsbeispiel. Auch andere Ausgestaltungen des Verdichterrads 112, analog zum Ausführungsbeispiel mit den Bohrungen 114, sind grundsätzlich möglich.

## Patentansprüche

1. Verdichter zum Verdichten fluider Medien, umfassend eine Sensorvorrichtung (110) zur Erfassung mindestens einer Rotationseigenschaft, insbesondere zur Drehzahlerfassung des Verdichters (111), wobei die Sensorvorrichtung (110) mindestens ein erstes Element (132) und mindestens ein zweites Element (134) umfasst, wobei das erste Element (132) und das zweite Element (134) um eine Rotationsachse (136) relativ zueinander rotierbar sind, wobei die Sensorvorrichtung (110) mindestens einen mit dem ersten Element (132) verbundenen Felderzeuger (120) aufweist, wobei der Felderzeuger (120) eingerichtet ist, um an mindestens einem Ort des zweiten Elements (134) mindestens einen Wirbelstrom zu erzeugen, wobei das erste Element (132) weiterhin mindestens einen Feldsensor (122) zur Erfassung mindestens eines durch den Wirbelstrom erzeugten Feldes umfasst, wobei das erste Element (132) und das zweite Element (134) gegeneinander entlang der Rotationsachse (136) versetzt angeordnet sind, wobei das zweite Element (134) eingerichtet ist, um das durch den Wirbelstrom erzeugte Feld in Abhängigkeit von einer Winkelstellung des zweiten Elements (134) relativ zum ersten Element (132) zu variieren,
wobei der Verdichter (111) ein das erste Element (132) umfassendes Verdichtergehäuse (130) und ein das zweite Element (134) umfassendes Verdichterrad (112) mit einer Mehrzahl von Verdichterschaufeln aufweist, wobei das Verdichterrad (112) eine einem Boden (116) des Verdichtergehäuses (130) zuweisende Rotationsfläche (138) aufweist und auf der der Rotationsfläche (138) gegenüberliegenden Seite des Verdichterrades (112) die Mehrzahl von Verdichterschaufeln angeordnet ist, **dadurch gekennzeichnet, dass** der mindestens eine Felderzeuger (120) und der mindestens eine Feldsensor (122) auf einer von den Verdichterschaufeln abgewandten Seite des Verdichterrads (112) in dem Boden (116) des Verdichtergehäuses (130) angeordnet sind und in der Rotationsfläche (138) des Verdichterrades Bohrungen (114) oder Ausfräsungen (128) angeordnet sind.

2. Verdichter nach dem vorhergehenden Anspruch, wobei das Verdichterrad (112) so angeordnet ist, dass der Ort, an dem der Wirbelstrom erzeugt wird, entlang der Rotationsachse (136) gegenüber dem Felderzeuger (120) versetzt angeordnet ist.

3. Verdichter nach Anspruch 1, wobei die Rotationsfläche (138) genau zwei Vertiefungen (114; 128) umfasst.

4. Verdichter nach einem der vorhergehenden Ansprüche, wobei der Felderzeuger (120) mindestens eine Spule (142) umfasst, wobei die Spule (142) eingerichtet ist, um ein magnetisches Wechselfeld zu erzeugen, wobei der Feldsensor (122) zumindest teilweise bauteilidentisch mit der Spule (142) ist, wobei die Sensorvorrichtung (110) mindestens eine Auswertevorrichtung (126) umfasst, wobei die Auswertevorrichtung (126) eingerichtet ist, um aus einem zeitlichen Verlauf eines elektrischen Signals der Spule (142) die Rotationseigenschaft zu bestimmen.

5. Verdichter nach einem der vorhergehenden Ansprüche, wobei das erste Element (132) zumindest teilweise aus einem Kunststoffmaterial gefertigt ist.

6. Verdichter nach dem vorhergehenden Anspruch, wobei der Felderzeuger (120) und/oder der Feldsensor (122) zumindest teilweise in dem Kunststoffmaterial eingebettet ist.

## Claims

1. Compressor for compressing fluid media, comprising a sensor device (110) for detecting at least one rotational property, in particular for rotational speed detection of the compressor (111), wherein the sensor device (110) comprises at least one first element (132) and at least one second element (134), wherein the first element (132) and the second element (134) are rotatable relative to one another about an axis of rotation (136), wherein the sensor device (110) has at least one field generator (120) which is connected to the first element (132), wherein the field generator (120) is designed to generate at least one eddy current at at least one location of the second element (134), wherein the first element (132) furthermore comprises at least one field sensor (122) for detecting at least one field generated by the eddy current, wherein the first element (132) and the second element (134) are arranged offset with respect to one another along the axis of rotation (136), wherein the second element (134) is designed to vary, in a manner dependent on an angular position of the second element (134) relative to the first element (132), the field generated by the eddy current,
wherein the compressor (111) has a compressor housing (130), which comprises the first element (132), and a compressor wheel (112), which comprises the second element (134) and has a plurality of compressor blades, wherein the compressor wheel (112) has a rotational surface (138) facing a base (116) of the compressor housing (130), and the plurality of compressor blades is arranged on that side of the compressor wheel (112) which is opposite the rotational surface (138), **characterized in that** the at least one field generator (120) and the at least one field sensor (122) are arranged in the base (116) of the compressor housing (130) on a side of the compressor wheel (112) which faces away from the compressor blades, and bores (114) or milled-out portions (128) are arranged in the rotational surface (138) of the compressor wheel.

2. Compressor according to the preceding claim, wherein the compressor wheel (112) is arranged such that the location at which the eddy current is generated is arranged offset with respect to the field generator (120) along the axis of rotation (136).

3. Compressor according to Claim 1, wherein the rotational surface (138) comprises exactly two depressions (114; 128).

4. Compressor according to one of the preceding claims, wherein the field generator (120) comprises at least one coil (142), wherein the coil (142) is designed to generate a magnetic alternating field, wherein the field sensor (122) is at least partially identical to the coil (142) in terms of components, wherein the sensor device (110) comprises at least one evaluation device (126), wherein the evaluation device (126) is designed to determine the rotational property from a temporal profile of an electrical signal of the coil (142).

5. Compressor according to one of the preceding claims, wherein the first element (132) is at least partially produced from a plastic material.

6. Compressor according to the preceding claim, wherein the field generator (120) and/or the field sensor (122) are/is at least partially embedded in the plastic material.

## Revendications

1. Compresseur destiné à comprimer un milieu fluide, le compresseur comprenant un dispositif de détection (110) destiné à détecter au moins une propriété de rotation, en particulier pour détecter la vitesse de rotation du compresseur (111), le dispositif de détection (110) comprenant au moins un premier élément (132) et au moins un deuxième élément (134), le premier élément (132) et le deuxième élément (134) pouvant tourner l'un par rapport à l'autre sur un axe de rotation (136), le dispositif de détection (110) comportant au moins un générateur de champ (120) relié au premier élément (132), le générateur de champ (120) étant adapté pour générer au moins un courant de Foucault à au moins un emplacement du deuxième élément (134), le premier élément (132) comprenant en outre au moins un capteur de champ (122) destiné à détecter au moins un champ généré par le courant de Foucault, le premier élément (132) et le deuxième élément (134) étant décalés l'un de l'autre le long de l'axe de rotation (136), le deuxième élément (134) étant adapté pour faire varier le champ, généré par le courant de Foucault, en fonction d'une position angulaire du deuxième élément (134) par rapport au premier élément (132), le compresseur (111) comportant un boîtier de compresseur (130) qui comprend le premier élément (132) et une roue de compresseur (112) qui comprend le deuxième élément (134) et qui est pourvue d'une pluralité d'aubes de compresseur, la roue de compresseur (112) comportant une surface de révolution (138) tournée vers un fond (116) du boîtier de compresseur (130) et la pluralité d'aubes de compresseur étant disposées du côté de la roue de compresseur (112) qui est opposé à la surface de révolution (138), **caractérisé en ce que** l'au moins un générateur de champ (120) et l'au moins un capteur de champ (122) sont disposés dans le fond (116) du boîtier de compresseur (130) sur un côté de la roue de compresseur (112) qui est opposé aux aubes de compresseur et des alésages (114) ou des fraisages (128) sont disposés dans la surface de révolution (138) de la roue de compresseur.

2. Compresseur selon la revendication précédente, la roue de compresseur (112) étant disposée de telle sorte que l'emplacement où le courant de Foucault est généré soit disposé de manière décalée du générateur de champ (120) le long de l'axe de rotation (136).

3. Compresseur selon la revendication 1, la surface de révolution (138) comprenant exactement deux évidements (114 ; 128).

4. Compresseur selon l'une des revendications précédentes, le générateur de champ (120) comprenant au moins une bobine (142), la bobine (142) étant adaptée pour générer un champ magnétique alternatif, le capteur de champ (122) étant un élément de construction au moins partiellement identique à la bobine (142), le dispositif de détection (110) comprenant au moins un dispositif d'évaluation (126), le dispositif d'évaluation (126) étant adapté pour déterminer la propriété de rotation à partir de la variation dans le temps d'un signal électrique de la bobine (142).

5. Compresseur selon l'une des revendications précédentes, le premier élément (132) étant fabriqué au moins partiellement à partir d'une matière plastique.

6. Compresseur selon la revendication précédente, le générateur de champ (120) et/ou le capteur de champ (122) étant incorporé au moins partiellement à la matière plastique.
